# EUROPEAN PATENT SPECIFICATION

(11) **EP 3 094 216 B1**
(45) Date of publication and mention of the grant of the patent: **02.01.2019**
(21) Application number: 15737926.4
(22) Date of filing: 14.01.2015
(51) Int. Cl.: A47F 5/08, B63B 35/79, A47F 7/00, A63C 11/02

(54) **FIN MOUNTED SURFBOARD RACK**
FLOSSENMONTIERTES SURFBRETTGESTELL
SUPPORT DE PLANCHE DE SURF MONTÉ SUR AILETTE

(30) Priority: 14.01.2014 US 201461927124 P
(43) Date of publication of application: 23.11.2016
(73) Proprietor: Aframe LLC, Las Vegas, NV 89102 (US)
(72) Inventor: KOVARI, Netanel Tuvia, 6226116 Tel Aviv (IL)
(74) Representative: Lecomte & Partners
(86) International application number: PCT/IL2015/050054
(87) International publication number: WO 2015/107524

(56) References cited:
- AU-A1- 2009 202 168
- FR-A1- 2 970 877
- JP-A- H10 252 985
- US-A- 4 878 585
- US-A- 5 141 116
- US-A- 5 477 968
- US-A1- 2008 057 804
- US-A1- 2011 011 812
- US-A1- 2012 175 332
- US-B1- 7 896 175
- US-B1- 7 896 175

## Description

### FIELD OF INVENTION

The present invention relates to a storage and display device and a method thereof. More specifically the present invention pertains to a surfboard rack in which the surfboard is suspended on its fins.

### BACKGROUND

Existing surfboard racks, whether horizontal or vertical, require that a portion of the surfboard's frame/body is suspended upon them. This characteristic takes up unnecessary space, can cause damage to the surfboard and even personal injury since it requires extensive lifting. Such is the case with racks that embrace and support the side of the board while the board is placed on the ground as in, for example, US patent No. 5833079. These racks are commonly adjacent to the wall, encroaching on a lot of space and exposing the surfboard to damage since its body is entirely exposed to the environment and the elements or, as in the case of horizontal wall-mounted racks, where it can often be hard to place the surfboards upon them since they often require extensive lifting and manipulation, sometimes even overhead lifting.

Some surfboard racks hold the surfboards adjacent but not parallel to the wall, which takes up unnecessary space, while some require extensive lifting and manipulation or they expose the surfboard and its parts to damage and even to potential personal injury. Furthermore, once surfboards are placed upon any of the current existing racks, the racks themselves, or a portion of them, are visible, exposed and apparent and are not aesthetically pleasing. They also usually display the surfboard on its side, or on its back, which is not as aesthetically pleasing as the full top view of the board where the entire board is visible including its unique shape and/or artwork.

Japanese patent application published JP H10 252985 A relates to a surfboard rack.

Granted US patent numbered US 7,896,175 B1 relates to a weight activated storage device for retaining elongated objects such as a surfboard.

US patent application published US 2008/0057804 A1 relates to a carrier.

Australian patent application published AU 2009202168 A1 relates to a surfboard holder and rack.

There is therefore a long felt and unmet need to provide a more convenient solution for storing and displaying surfboards.

### SUMMARY

The present invention provides a surfboard rack, as defined by the appended claims, for mounting, storing and displaying a surfboard by supporting and bracing a surfboard; the surfboard comprises a first end having at least two parallel fins and a second end; the surfboard rack, which invisible from a front view when accommodating said at least one surfboard, for mounting, storing and displaying at least one surfboard; said at least one surfboard comprising a first end and a second end; said first end having at least one fin supportable and braceable by said surfboard rack; whereby said surfboard rack comprises:a) a main body comprising at least two arms and a brace plate attachable onto a surface; and,b) support sleeves attachable onto said at least two arms; said adjustable support sleeves are adapted to accommodate said at least one fin on said first end of said surfboard while said second end is leaning against said surface,wherein at least one of the following is true:c) said at least two sliding sleeves, comprises barriers at each of their end; said barriers are adapted to secure said surfboard into place and prevent it from tipping or falling over;c) said at least two sliding sleeves comprise cushion rings adapted to prevent damage to said surfboard/fins,and further wherein said at least two arms comprises at least one indentation along their sides and said at least two sliding sleeves comprise an elongated protrusion along their side, said at least one indentation is adapted to fixate said at least two sliding sleeves to said arms by accommodating said protusion.

It is another object of the current invention to disclose the surfboard rack as defined in any of the above, wherein said surfboard rack is invisible from a front view when accommodating said at least one surfboard.

It is another object of the current invention to disclose the surfboard rack as defined in any of the above, wherein said support sleeves (4) are adjustable.

It is another object of the current invention to disclose the surfboard rack as defined in any of the above, wherein said main body, brace plate, and adjustable support sleeves are made of a material selected from a group consisting of: metal, plastic, composite materials, wood, and any combination thereof.

It is another object of the current invention to disclose the surfboard rack as defined in any of the above, wherein at least two sliding sleeves are adjustable to the different widths of different surfboards' widths and/or particularly to the differing lengths between surfboards' fins.

It is another object of the current invention to disclose the surfboard rack as defined in any of the above, comprises barriers at each of their ends; the barriers are adapted to secure the surfboard into place and prevent it from tipping or falling over.

It is another object of the current invention to disclose the surfboard rack as defined in any of the above, wherein at least two sliding sleeves comprise cushion rings adapted to prevent damage to the surfboard/fins.

It is another object of the current invention to disclose the surfboard rack as defined in any of the above, wherein at least one lighting apparatus is attached to the main body, thus lighting the area behind the surfboard and the surface around it.

It is another object of the current invention to disclose the surfboard rack as defined in any of the above, wherein said at least two arms (2) comprises at least one indentation (8) along their sides and said at least two sliding sleeves comprise an elongated protrusion (9) along their side; said at least one indentation is adapted to fixate said at least two sliding sleeves to said arms by accommodating said protrusion.

It is another object of the current invention to disclose the surfboard rack as defined in any of the above, wherein said body additionally comprise an adjustable bottom brake (7) attached to the bottom edge of said body; said bottom brake is adapted to serve as a blocking mechanism for preventing said at least one surfboard from falling over backwards.

It is another object of the current invention to disclose the surfboard rack as defined in any of the above, wherein said surface is vertical or horizontal.

It is another object of the current invention to disclose the surfboard rack as defined in any of the above, wherein said surfboard rack additionally comprises a top rest support adapted to rest said second end of said and to provide cushioning instead of resting directly on said surface.

It is another object of the current invention to disclose the surfboard rack as defined in any of the above, wherein said surfboard rack additionally comprises locking mechanism adapted to lock said fin.

The present invention further provides a method for mounting, storing and displaying a surfboard; the surfboard comprising a first end having at least two parallel fins and a second end the method comprising steps of: (a) obtaining a surfboard rack; the surfboard rack comprising a main body (1) and at least two support sleeves(4); the main body further comprises at least two arms (2) and a brace plate (3); (b) attaching the main body through the brace plate to a surface (c) adjusting the width of at least two adjustable support sleeves on at least two arms; (d) leaning at least two parallel fins of the first end on at least two adjustable support sleeves and the second end against the surface.

It is another object of the current invention to disclose the method as defined in any of the above, wherein said surfboard rack is invisible from a front view when accommodating said at least one surfboard.

It is another object of the current invention to disclose the method as defined in any of the above, additionally comprising a step of adjusting said support sleeves.

It is another object of the current invention to disclose the method as defined in any of the above, additionally comprising a step of adjusting at least two sliding sleeves to the different widths of different surfboards' widths and/or particularly to the differing lengths between surfboards' fins.

It is another object of the current invention to disclose the method as defined in any of the above, additionally comprising a step of attaching to at least two sliding sleeves barriers at each of their ends; the barriers are securing the surfboard into place and prevent it from tipping or falling over.

It is another object of the current invention to disclose the method as defined in any of the above, additionally comprising a step of attaching to at least two sliding sleeves cushion rings; the cushion rings are preventing damage to the surfboard/fins.

It is another object of the current invention to disclose the method as defined in any of the above, additionally comprising a step of attaching to the main body at least one lighting apparatus, thereby lighting the area behind the surfboard and the surface around it.

It is another object of the current invention to disclose the method as defined in any of the above, additionally comprising a step of creating at least one indentation (8) in said arms along their sides and creating at least one protrusion (9) along said at least two sliding sleeves; said at least one indentation is fixating said at least two sliding sleeves to said arms by accommodating said protrusion.

It is another object of the current invention to disclose the method as defined in any of the above, additionally comprising a step of preventing said at least one surfboard from falling over backwards by an adjustable bottom brake (7) attached to the bottom edge of said body.

It is another object of the current invention to disclose the method as defined in any of the above, additionally comprising a step of resting said second end of said surfboard on a top rest support connected to said surface, providing cushioning instead of resting directly on said surface.

It is another object of the current invention to disclose the method as defined in any of the above, additionally comprising a step of locking said fin to said surfboard rack.

The present invention further provides a surfboard rack for mounting, storing and displaying at least one single fin surfboard by supporting and bracing said fin; said at least one single fin surfboard comprises a first end having said fin and a second end; said surfboard rack comprises: (a) a main body (1) comprising at least two arms (2) and a brace plate (3) attachable onto a surface; and, (b)adjustable support sleeves(4) attachable onto said at least two arms; two supporters on each od said sleeves adapted to distribute the weight of said surfboard evenly; wherein said adjustable support sleeves (4) are adapted to accommodate said fin on said first end of said surfboard while said second end is leaning against said surface; thereby said surfboard rack (100) is invisible from a front view when accommodating said at least one surfboard.

It is another object of the current invention to disclose the surfboard rack as defined in any of the above, wherein said surfboard rack additionally comprises locking mechanism adapted to lock said fin.

The present invention further provides a surfboard rack, for mounting, storing and displaying at least one surfboard by supporting and bracing at least one fin of said; said at least one surfboard comprises a first end having said at least one fin and a second end; said surfboard rack comprises: a main body (1) comprising at least two arms (2) and a brace plate (3) attachable onto a surface; and, adjustable support sleeves(4) attachable onto said at least two arms; wherein said adjustable support sleeves (4) are adapted to accommodate said at one fin on said first end of said surfboard while said second end is leaning against said surface; thereby said surfboard rack (100) is invisible from a front view when accommodating said at least one surfboard.

It is another object of the current invention to disclose the surfboard rack as defined in any of the above, wherein said surfboard rack additionally comprises a detachable harness adapted to stabilize a surfboard comprising a single fin.

### BRIEF DESCRIPTION OF THE DRAWINGS

In the following detailed description of the preferred embodiments, reference is made to the accompanying drawings that form a part hereof, and in which are shown by way of illustration specific embodiments in which the invention may be practiced. It is understood that other embodiments may be utilized and structural changes may be made without departing from the scope of the present invention, which is defined by the appended claims. The present invention may be practiced according to the claims without some or all of these specific details. For the purpose of clarity, technical material that is known in the technical fields related to the invention has not been described in detail so that the present invention is not unnecessarily obscured.
Figure 1 is a perspective view of the assembled surfboard rack;
Figure 2 presents an exploded view of the present invention, disassembled, illustrating its three main components;
Figure 3 illustrates the adjustable support sleeves;
Figure 4 illustrates a bottom view of an embodiment of the surf rack with extended sleeves;
Figure 5 illustrates a perspective view of an example of a surfboard mounted and suspended on the rack, from an angled front view illustrating a corner wall and the resting points;
Figure 6 illustrates a side view of an example of a surfboard mounted and suspended on the rack from a side angle, illustrating the wall and the resting points;
Figure 7 illustrates a rear view of the rack with extended arms and how a wide surfboard, with wider width between its fins, rests upon it; and,
Figure 8 illustrates a rear view of the rack with slightly extended arms and how a narrow surfboard, with narrow width between its fins, resting upon it.

### DETAILED DESCRIPTION OF THE INVENTION

In the following detailed description of the preferred embodiments, reference is made to the accompanying drawings that form a part hereof, and in which are shown by way of illustration specific embodiments in which the invention may be practiced. It is understood that other embodiments may be utilized and structural changes may be made without departing from the scope of the present invention, which is defined by the appended claims. The present invention may be practiced according to the claims without some or all of these specific details. For the purpose of clarity, technical material that is known in the technical fields related to the invention has not been described in detail so that the present invention is not unnecessarily obscured.

The surfboard rack recited in this invention, as opposed to other racks, uses the fins of the surfboard as the source of support for mounting and resting the surfboard upon it. It is adjustable, and allows the user to save space, to use little effort and to create a stylish display illusion that the board is smoothly suspended on the wall by nothing visible, because once the surfboard is mounted, the rack becomes entirely unseen behind it (from a frontal point of view, and little seen from its sides). Firstly, a person fastens the adjustable sliding sleeves into place and according to the width of the board's fins. Then, the rack is placed on the wall (or the desired surface) at the desired height. Next, the surfboard is placed on the rack with its bottom part, where its fins are located, facing the wall and resting the fins upon the rack (the fins too are facing the wall).

With the Fin Mounted Surfboard Rack, firstly, the suspension of the surfboard is novel, because it is created by placing solely its fins on the horizontal rack and not its body. Thus, it creates a highly space saving solution for storage since the surfboard lays almost entirely flush and parallel against the wall, utilizing the natural support of the wall or an added top rest/support for the board to rest upon it. And with the help of the naturally curved shape of the fin, the board stands fastened and secured upon the rack.

Furthermore, since the rack is placed completely behind the mounted surfboard, and since it is adjustable to the width between the fins, once it rests upon the rack - the rack is invisible from a frontal point of view. Thus, stylish display where the surfboard is smoothly floating on the wall and the rack is unseen behind it.

Thus, the rack creates a highly space saving solution for storing surfboards on one hand and a stylish solution for displaying surfboards on the other. The rack is comprised of three main parts:
The T shape body (1), with arms (2), a wall mount brace plate (3) and two adjustable sliding sleeves (4).

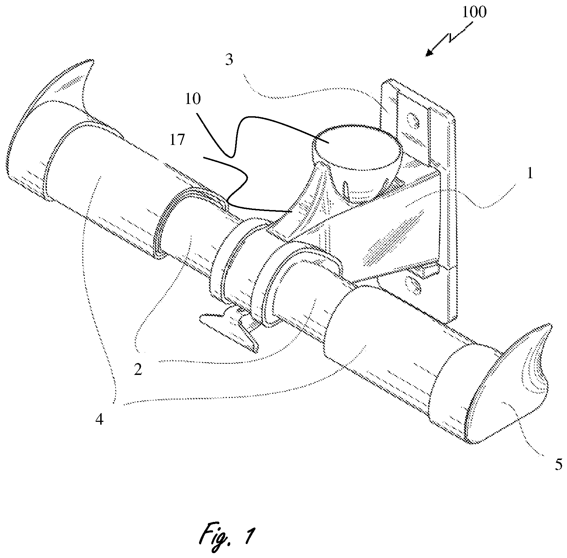

Reference is now made to Fig. 1 which shows a perspective view of the surfboard rack. The rack is comprised of three main components, the T shaped body (1), the sleeves (4) and the fin shaped ends (5). The T shaped body (1) is comprised of two parts, the arms (2) and the brace plate (or wall mount) (3). Figure 1 shows the present invention in its assembled form, upright and extended.

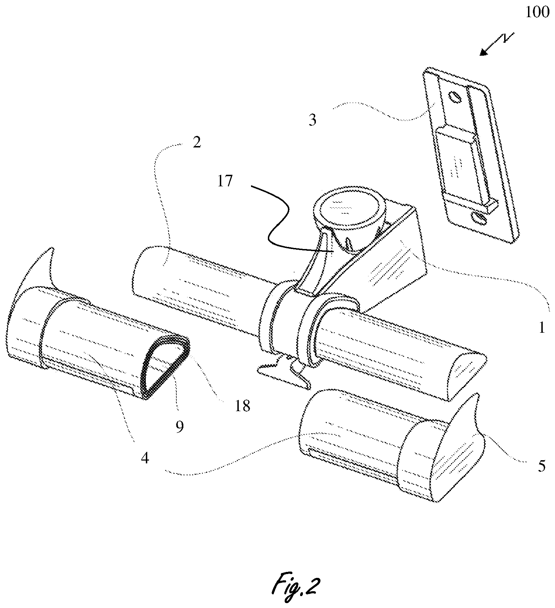

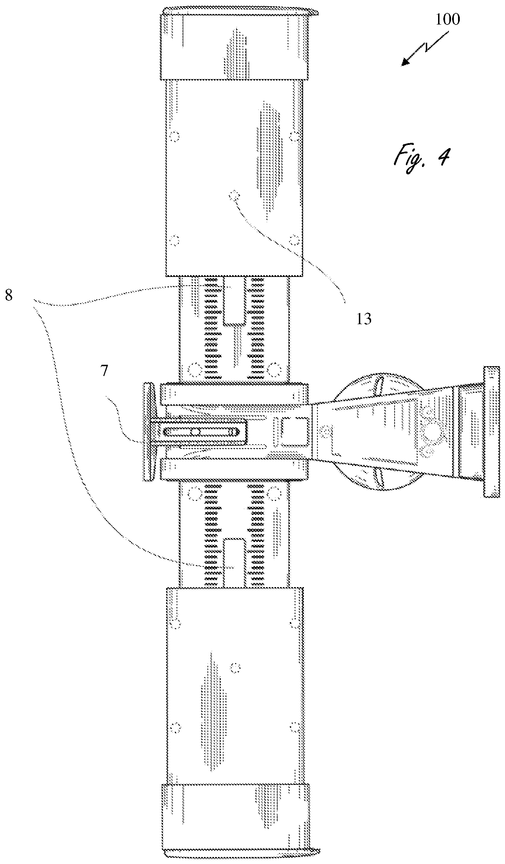

Reference is now made to Fig. 2 which presents an exploded view of the present invention, disassembled, illustrating its three main components; the T shaped body (1) comprising the arms (2), the brace plate (or wall mount) (3) the sleeves (4) and the fin shaped ends (5), of the present invention, assembled, upright and extended. Along the side of the arms are at least one indentation (8) (can only be seen in Fig. 4) which fixates the sleeves to them. The sleeves are accommodated within the indentations of the arms through matching elongated protrusions along their sides (9.) These indentations provide means of precision to attach the sleeves onto the arms so they stay fixed in place. They further provide an area to lock the sleeves onto the arms.

All of the surfboard rack parts can be manufactured either from plastic or a mixture of plastic and minerals, or metal, or wood.

The main body (1), from a top view, is in the shape of the letter T. In a specific embodiment, it is roughly 11 inches wide, 3 inches tall and 5 inches deep. It consists of two arms (2) that support the sliding adjustable sleeves (4) to rest upon it.

The rack can accommodate any fin's length, shape or size. In a specific embodiment, the brace plate wall mount (3) is roughly 6 inches high, 3 inches wide 1/4 of an inch deep. It is connected adjacent to the body of the rack and provides a point and method of attaching the rack onto a wall, a vertical space, on the floor, or to attach it to any other surface or apparatus. The plate can be either manufactured as one unit with the body, or manufactured separately. Manufacturing it separately provides an ability to detach the body from the plate, leaving only the plate on the wall, thus allowing an ability to easily detach and remove the rack, for easy storage and to put away when not in use.

There are two sliding and adjustable sleeves (4), illustrated in detail in figures 1, 2 and 3, which connect to the two arms (2) of the main body. In a specific embodiment, these sleeves are roughly 5 inches long, 1.2 inches tall and 2.5 inches deep. They too are made mostly out of plastic, wood, metal, glass or a combination of these.

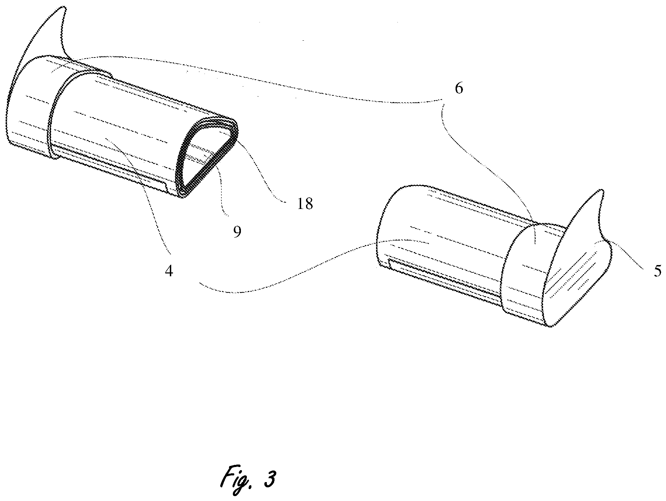

Reference is now made to Fig. 3 which illustrates in detail the adjustable sleeves (4). Each sleeve is sealed at one end with barriers/ends (5) having the shape of a fin. The fins of the surfboard rest directly upon the sleeves. The areas where the fins rest upon, are the cushion rings/bands (6), and are located closer to the end of the sleeve, adjacent to the fin shaped ends (5) and also in the middle area of the rack at the end tip of the body as shown in Fig. 1. These cushion bands are made of either silicon, soft vinyl or another material that is highly durable yet is soft and provides cushioning qualities both for the fins and for the body of the surfboard. The cushion rings are manufactured separately and are added onto the sleeve. The sleeve is a hollow tube that allows the arm of the body to be inserted to it. The inner tubes (18) have elongated protrusions (9) for securing and fixating the sleeves into place and preventing them from moving out of place.

Each sleeve is sealed at one end with barriers/ends (5). In this embodiment it is in the shape that resembles a fin. This barrier is highly important and has two main functions: 1. it acts as the measuring tool that adjusts and sets the distance of the rack for a particular surfboard, based upon the width of its fins. Thus, it plays a role in concealing the rack behind the surfboard as it rests upon it. 2. It acts as the secure barrier for the board and prevents it from sliding from it and/or falling on its side.

Reference is now made to Fig. 4 which shows a bottom view of the adjustable sleeves accommodated on the arms of the main body of the surf rack. The elongated protrusions (9) (which can only be seen in Fig. 2 and 3) which allow a point to fixate the sleeves upon the arms, with the additional use of a screw hole (13) or other locking mechanisms that serve to fixate and lock the sleeve onto a specific point on the arm. For best results and safety, the sleeves should be adjusted, sets and locked, as tightly as possible to the exact width between the fins of the board, both for concealment of the rack and for safety. The sleeves are then fastened into place with screws that are placed in screw holes in the sleeve (13) or by any other locking mechanism. In this embodiment, the screw (or bolt) is a hex head screw, common to surfboard fin screws and is operated with the use of an Allen (or hex) key. It is roughly 0.3-0.5 inches long and 0.2 inches wide. A bottom brake (7), illustrated in Figure 4, is attached to the bottom edge of the body and serves as a mechanism that blocks the curving motion and prevents the surfboard from falling over backwards. This bottom brake is adjustable and can move forward and backward to accommodate different surfboards shapes and sizes, which reside on the rack at different points. The brake is fastened at the point of contact with the board, either with screws or different locking mechanisms.

### Other implementations and embodiments:

Fin Lock: At the middle part of the barrier (fin shaped ends) of both sleeves or on one only, located at the outer side of the barrier sleeve, is a locking arm that extends and further locks the fin firmly into place. This arm can be moved and adjusted based upon the size and length of the fin. The locking arm rests upon a rail - the rail helps to adjust the arms' length. The arm can be locked into place or unlocked into place by a clipping mechanism. This lock serves as an extra protection to prevent the board from tipping over and falling off the rack.

The body and the brace plate can be separated and manufactured separately, allowing the two pieces to connect at different lengths thus creating two effects: 1. To adjust the depth of the rack to accommodate different lengths of different fins, and 2. To detach the body and leaving only the plate attached to the surface, which will allow easy detachment, transfer or storage of the rack.

A different embodiment of the body can accommodate a lighting apparatus, batteries etc., which can light the area behind the mounted surfboard. Thus, creating even a more stylish effect for displaying the surfboard, turning the surfboard rack into a light fixture. Fig. 1 shows where the bulb (10) is placed and how it is harnessed in a specially designed harness (17), in this case in the shape of a cup. The light bulb can rest on top of the body, harnessed in a specially designed apparatus or it can be embedded into the body of the rack. The Bulb must be a low heat emitting bulb, such as a low voltage LED bulb, to ensure that the surfboard is not exposed to heat that can damage its surface or glossing. The bulb can be a simple bulb that simply projects light, or a special bulb with special features used to create greater lighting effects; 1. A dimmable bulb, to control the intensity and power of the light. 2. A remote controlled RGB bulb, operated by a special remote control, which controls ON/OFF operations, dimmability, different colors of light and other effects. 3. A bluetooth or wifi RGB bulb, which has similar cabalities as the remote RGB bulb, described above, but is operated remotely thru a computer or a cell phone. This special bulb allows remote control of the rack's lighting from close vicinity or from a distance by the use of the internet or Bluetooth.

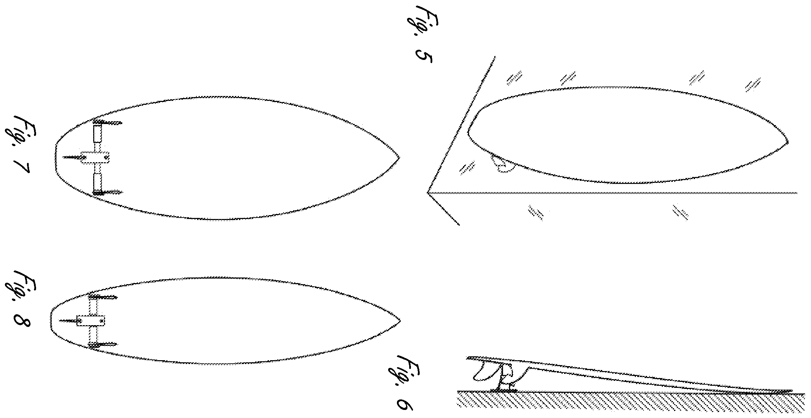

In case of a single fin surfboard there are two embodiments: 1. The rack will be built differently to accommodate one fin only, and two supports on each side of the fin to provide extra support and distribution of weight of the surfboard, to prevent the board from tipping over and to prevent it from breaking apart from the fin and causing damage to it and to the environment. The single fin rack could also have a locking mechanism at the bottom area of the rack, to lock the fin and thus the board into place. 2. A detachable apparatus, shaped to harness a single fin will be provided and manufactured separately, and will be added onto the existing rack. This will give the user and add-on option for boards with single fins or more.
5. Multiple surfboards - In a different embodiment, the rack can be made longer to hold and support multiple surfboards one next to the other. In this different version, the rack can be extended and adjusted to hold multiple boards and not only one, forgoing the effect of the unseen rack behind it since all will be connected to the same rod.
6. The rack can also be mounted and attached not only to a vertical surface but also a horizontal surface, like a floor. In this embodiment, the rack shall be placed upright on the ground near a wall, or any other configuration to provide the support needed at the top end of the surfboard to rest upon. Figs 5-8 demonstrates a single surfboard accommodate on the surfboard rack. The figures show a perspective, side and two rear-views, respectively.

The fixed rack embodiment: a simpler version of the rack can embody the brace plate and the T shaped body with the arms, forgoing the use of the adjustable sleeves. Thus, the rack will have a fixed length and it will be nonadjustable. The barriers (or fin shaped ends) that are intended to reside on the sleeves, will now reside at the tip of the arms instead. In this embodiment, however, the rack will not be hidden in most cases and a portion of the arms will be visible when most boards rest upon it.

A top rest support can be added as an accessory to rest the top area of the board directly upon it. This accessory provides a cushioned resting surface for the board to lay upon instead of resting directly on the surface. This accessory adds several benefits: it provides a cushioning point to protect the surfboard and the wall from contact and normal wear and tear, it allows more light to pass through, around and behind the surfboard, thus enhancing the lighting/floating effect and it provides a point to harness a string to use as a top tie down feature, to tie the board in the top (nose) area and thus to provide a very secure harness and to eliminate any possibility of a fall. The top rest can also embody extendable arms, which can be adjusted according to the board's width. Clamps at the end of the arms can fasten and hold the board in place.

## Claims

1. A surfboard rack (100), invisible from a front view when accommodating said at least one surfboard, for mounting, storing and displaying at least one surfboard; said at least one surfboard comprising a first end and a second end; said first end having at least one fin supportable and braceable by said surfboard rack; said surfboard rack comprising:
a) a main body (1) comprising at least two arms (2) and a brace plate (3) attachable onto a surface; and,
b) support sleeves (4) attachable onto said at least two arms; said adjustable support sleeves (4) are adapted to accommodate said at least one fin on said first end of said surfboard while said second end is leaning against said surface,
**characterized in that**:
c) said at least two sliding sleeves (4), comprises barriers (5) at each of their end; said barriers (5) are adapted to secure said surfboard into place and prevent it from tipping or falling over;
d) said at least two sliding sleeves (4) comprise cushion rings (6) adapted to prevent damage to said surfboard/fins,
and further wherein said at least two arms (2) comprises at least one indentation (8) along their sides and said at least two sliding sleeves (4) comprise an elongated protrusion (9) along their side, said at least one indentation (8) is adapted to fixate said at least two sliding sleeves (4) to said arms by accommodating said protrusion.

2. The surfboard rack of claim 1, wherein said at least two sliding sleeves (4) are adjustable to the different widths of said fins and the different spaces therebetween.

3. The surfboard rack of claim 1, wherein said body additionally comprise an adjustable bottom brake (7) attached to the bottom edge of said body; said bottom brake is adapted to serve as a blocking mechanism for preventing said at least one surfboard from falling over backwards.

4. The surfboard rack of claim 1, wherein said surface is vertical or horizontal.

5. The surfboard rack of claim 1, wherein at least one of the following is true:
a) said surfboard rack additionally comprises a top rest support adapted to rest said second end of said surfboard and to provide cushioning instead of resting directly on said surface; and
b) said surfboard rack additionally comprises a locking mechanism adapted to lock said fin; said locking mechanism is applied to at least one of said sleeves.

6. The surfboard rack of claim 1, wherein at least one lighting apparatus (10) is attached to said main body, thus lighting the area behind the surfboard and the surface around it.

## Patentansprüche

1. Surfbrettgestell (100), unsichtbar von einer Vorderansicht, wenn es das mindestens eine Surfbrett aufgenommen hat, zum Montieren, Lagern und Ausstellen mindestens eines Surfbretts; wobei das mindestens eine Surfbrett ein erstes Ende und ein zweites Ende umfasst; wobei das erste Ende mindestens eine Finne aufweist, die durch das Surfbrettgestell tragbar und verankerbar ist; wobei das Surfbrettgestell umfasst:
a) einen Hauptkörper (1), der mindestens zwei Arme (2) und eine Verankerungsplatte (3), die auf einer Oberfläche angebracht werden kann, umfasst; und
b) Traghülsen (4), die an den mindestens zwei Armen anbringbar sind; wobei die verstellbaren Traghülsen (4) dafür ausgelegt sind, die mindestens eine Finne an dem ersten Ende des Surfbretts aufzunehmen, während das zweite Ende gegen besagte Oberfläche lehnt,
**dadurch gekennzeichnet, dass**
c) die mindestens zwei Gleithülsen (4) Barrieren (5) an jedem ihrer Enden umfassen; wobei die Barrieren (5) dafür ausgelegt sind, das Surfbrett an seinem Platz zu sichern und es am Umkippen oder Umfallen zu hindern;
d) die mindestens zwei Gleithülsen (4) Polsterringe (6) umfassen, die dafür ausgelegt sind, Beschädigung an den Surfbrettfinnen zu verhindern,
und weiter, wobei die mindestens zwei Arme (2) mindestens eine Vertiefung (8) entlang ihren Seiten umfassen und die mindestens zwei Gleithülsen (4) einen länglichen Vorsprung (9) entlang ihrer Seite umfassen, wobei die mindestens eine Vertiefung (8) dafür ausgelegt ist, durch Aufnehmen des Vorsprungs die mindestens zwei Gleithülsen (4) an den Armen zu fixieren.

2. Surfbrettgestell nach Anspruch 1, wobei die mindestens zwei Gleithülsen (4) an die unterschiedlichen Breitenmaße der Finnen und unterschiedlichen Räume zwischen diesen anpassbar sind.

3. Surfbrettgestell nach Anspruch 1, wobei der Körper zusätzlich eine verstellbare untere Bremse (7) umfasst, die an der Unterkante des Körpers angebracht ist; wobei die untere Bremse dafür ausgelegt ist, als Blockiermechanismus zu dienen, um zu verhindern, dass das mindestens eine Surfbrett nach hinten umfällt.

4. Surfbrettgestell nach Anspruch 1, wobei besagte Oberfläche vertikal oder horizontal ist.

5. Surfbrettgestell nach Anspruch 1, wobei mindestens einer der folgenden Punkte zutrifft:
a) das Surfbrettgestell umfasst zusätzlich einen oberen Auflageträger, der dafür ausgelegt ist, das zweite Ende des Surfbretts aufzulegen und eine Polsterung vorzusehen, statt direkt auf besagter Oberfläche aufzuliegen; und
b) das Surfbrettgestell umfasst zusätzlich einen Verriegelungsmechanismus, der dafür ausgelegt ist, die Finne zu verriegeln; wobei der Verriegelungsmechanismus an mindestens einer der Hülsen angebracht ist.

6. Surfbrettgestell nach Anspruch 1, wobei mindestens eine Beleuchtungsvorrichtung (10) an dem Hauptkörper angebracht ist, wodurch der Bereich hinter dem Surfbrett und die Oberfläche um dieses beleuchtet werden.

## Revendications

1. Support pour planche de surf (100), invisible depuis une vue frontale lorsque vient s'y loger ladite au moins une planche de surf, destiné au montage, au stockage et à la présentation d'au moins une planche de surf, ladite au moins une planche de surf comprenant une première extrémité et une seconde extrémité, ladite première extrémité possédant au moins un aileron qui peut être supporté par ledit support pour planche de surf et venir s'y ancrer ; dans lequel ledit support pour planche de surf comprend :
a) un corps principal (1) comprenant au moins deux bras (2) et une plaque d'ancrage (3) qui peut venir se fixer sur une surface ; et
b) des manchons de support (4) qui peuvent venir se fixer sur lesdits au moins deux bras, lesdits manchons de support réglables (4) étant conçus pour que vienne s'y loger ledit au moins un aileron sur ladite première extrémité de ladite planche de surf, tandis que ladite seconde extrémité vient s'appuyer contre ladite surface,
**caractérisé en ce que**
c) lesdits au moins deux manchons coulissants (4) comprennent des arrêts (5) à chacune de leurs extrémités, lesdits arrêts (5) étant conçus pour fixer ladite planche de surf en place et l'empêcher de basculer ou de tomber par terre ;
d) lesdits au moins deux manchons coulissants (4) comprennent des bagues d'amortissement (6) conçues pour empêcher une dégradation de ladite/desdits planche de surf/ailerons ;
et en outre dans lequel lesdits au moins deux bras (2) comprennent au moins un renfoncement (8) le long de leurs côtés et lesdits au moins deux manchons coulissants (4) comprennent une saillie allongée (9) le long de leurs côtés, ledit au moins un renfoncement (8) étant conçu pour la fixation desdits au moins deux manchons coulissants (4) auxdits bras par le fait que ladite saillie vient s'y loger.

2. Support pour planche de surf selon la revendication 1, dans lequel lesdits au moins deux manchons coulissants (4) peuvent être adaptés aux différentes largeurs desdits ailerons et aux différents espaces entre eux.

3. Support pour planche de surf selon la revendication 1, dans lequel ledit corps comprend en outre un frein réglable (7) dans sa partie inférieure, fixé au bord inférieur dudit corps, ledit frein inférieur étant conçu pour faire office de mécanisme de verrouillage destiné à empêcher ladite au moins une planche de surf de tomber vers l'arrière.

4. Support pour planche de surf selon la revendication 1, dans lequel ladite surface est verticale ou horizontale.

5. Support pour planche de surf selon la revendication 1, dans lequel au moins une des affirmations suivantes est vraie :
a) ledit support pour planche de surf comprend en outre un support d'appui supérieur conçu pour que vienne s'y appuyer ladite seconde extrémité de ladite planche de surf et pour procurer un amortissement à la place d'un appui direct sur ladite surface ; et
b) ledit support pour planche de surf comprend en outre un mécanisme de verrouillage conçu pour le verrouillage dudit aileron, ledit mécanisme de verrouillage étant appliqué sur au moins un desdits manchons.

6. Support pour planche de surf selon la revendication 1, dans lequel au moins un appareil d'éclairage (10) est fixé audit corps principal, pour ainsi éclairer la zone située derrière la planche de surf et la surface autour de cette dernière.
